(19) **Europäisches Patentamt**

**European Patent Office**

**Office européen des brevets**

(11) **EP 0 855 579 B1**

(12) **EUROPÄISCHE PATENTSCHRIFT**

(45) Veröffentlichungstag und Bekanntmachung des Hinweises auf die Patenterteilung:
**06.11.2002 Patentblatt 2002/45**

(51) Int Cl.$^7$: **G01F 9/00**

(21) Anmeldenummer: **98100681.0**

(22) Anmeldetag: **16.01.1998**

(54) **Verfahren zur Bestimmung des Kraftstoffverbrauches eines Fahrzeuges**

Method for determining the fuel consumption of a motor vehicle

Procédé pour la détermination de la consommation de carburant d'un véhicule

(84) Benannte Vertragsstaaten:
**DE FR GB SE**

(30) Priorität: **24.01.1997 DE 19702393**

(43) Veröffentlichungstag der Anmeldung:
**29.07.1998 Patentblatt 1998/31**

(73) Patentinhaber: **AUDI AG**
**85045 Ingolstadt (DE)**

(72) Erfinder: **Bier, Axel, Dr.**
**74831 Gundelsheim (DE)**

(74) Vertreter: **Geissler, Manfred**
**Audi AG**
**Patentabteilung**
**Postfach 220**
**85045 Ingolstadt (DE)**

(56) Entgegenhaltungen:
DE-A- 3 245 546     DE-A- 3 245 752
US-A- 4 062 230     US-A- 4 262 530

• HUMBURG M: "DER NEUE ZUHEIZER VON EBERSPACHER" ATZ AUTOMOBILTECHNISCHE ZEITSCHRIFT, Bd. 97, Nr. 12, 1.Dezember 1995, Seiten 856-858, 860 - 863, XP000542582

EP 0 855 579 B1

**Beschreibung**

Die Erfindung bezieht sich auf ein Verfahren zur Bestimmung des Kraftstoffverbrauches bei einem brennkraftmaschinengetriebenen Fahrzeug.

Die im Stand der Technik bekannten Methoden zur Kraftstoff-Verbrauchsbestimmung sind mannigfaltig und berücksichtigen auch eine Reihe von Randbedingungen.

Die DE 29 24 987 C2 führt eine Messung des Kraftstoffverbrauches mit Temperaturkompensationen durch. Die DE 32 45 546 A1 zeigt eine Vorrichtung zur Bestimmung des momentanen Kraftstoffverbrauches von Brennkraftmaschinen auf, wobei in einem Rechner ein Verbrauchskennfeld gespeichert wird. Die gespeicherten Werte können in Abhängigkeit von last- und drehzahlabhängigen Signalen abgerufen und dann durch eine Korrekturvorrichtung korrigiert werden. Dort werden die gespeicherten Verbrauchswerte in Abhängigkeit von beschleunigungs- und temperaturabhängigen Werten korrigiert. Die DE 32 45 752 A1 bezieht sich auf einen Verbrauchsanzeiger, bei dem verschiedene Verkehrssituationen, Fahrweisen und Fahrabsichten Berücksichtigung finden. In der DE 33 30 883 A1 wird eine Kraftstofffluß-Überwachungseinrichtung für eine elektronische Kraftstoffeinspritzschaltung beschrieben, wobei dieses System auch eine Diagnose bezüglich der Überwachung der Kraftstoffflußrate bei nicht in Betrieb sich befindender Brennkraftmaschine ermöglicht.

Der Erfindung liegt die Aufgabe zugrunde, eine bezüglich Genauigkeit weiter verbesserte Kraftstoffverbrauchsermittlung zu erzielen.

Die erfindungsgemäße Lösung ist im Kennzeichen des Patentanspruches 1 zu sehen. Der Unteranspruch zeigt eine vorteilhafte Weiterbildung und Ausgestaltung der erfindungsgemäßen Verfahrensweise auf.

Als sog. "Standheizungen" betriebene Fahrzeug-Zusatzheizungen sind im Stand der Technik seit langem hinlänglich bekannt (vgl. z. B. DE 30 25 283 C2, DE 43 45 057 C2). Hinweise für die nun vorgeschlagene erfindungsgemäße Vorgehensweise finden sich im Stand der Technik allerdings nicht.

Besonders sinnvoll ist die Anwendung der Erfindung bei sog. "Zuheizern". Diese, prinzipiell wie Standheizungen aufgebaute und funktionierende, brennstoffbetriebene Zusatzheizungen sind nur dann in Betrieb, wenn die Brennkraftmaschine des Fahrzeuges ebenfalls in Betrieb ist und gewisse weitere Randbedingungen gegeben sind (z. B. Außentemperatur < 5° und Kühlmitteltemperatur < 75°). Als diesbezüglicher Stand der Technik wird auf ATZ Automobiltechnische Zeitschrift 97 (1995) 12, Seiten 856 - 863, verwiesen.

Solche "Zuheizer" kommen neuerdings verstärkt bei Dieselmotoren mit direkter Einspritzung im PKW- und Kleintransporterbereich zum Einsatz. Diese Motoren setzen im Verhältnis Leistung/Kraftstoffverbrauch Maßstäbe. Eine ähnliche Entwicklung bei Ottomotoren ist denkbar. Als nicht so günstiger Nebeneffekt steht weniger Wärme für Heizzwecke zur Verfügung - meist zuwenig für eine bedarfsgerechte Beheizung der Fahrzeuge. Der Zuheizer soll die noch fehlende Wärme bereitstellen. Wird die vom Zuheizer gebrauchte, an sich relativ geringe und über den Fahrzeug-Tankbehälter bezogene Treibstoffmenge nicht berücksichtigt und lediglich der Verbrauch der Brennkraftmaschine erfaßt und dem Fahrzeugführer angezeigt, so steht diese Verbrauchsangabe im Widerspruch zur späteren Treibstoff-Nachtankmenge.

Die Erfindung ist, nachstehend näher erläutert. Auf die zugehörige Zeichnung wird Bezug genommen. Sie zeigt ein Funktionsschema der Signalerfassung und -auswertung für die Korrektur der Verbrauchsanzeige durch Berücksichtigung des Zuheizer-Treibstoffverbrauches.

Ein schematisiert dargestellter Zuheizer 1 wird von einer Dosierpumpe 2 auf an sich bekannte Weise mit Treibstoff versorgt, wobei über den vorgeschalteten Treibstofftank auch die Fahrzeug-Brennkraftmaschine gespeist wird.

Das spezifische Fördervolumen $Q_z$ der Dosierpumpe 2 ist direkt proportional der Taktfrequenz f (Hz) der Dosierpumpe wobei gilt:

$$Q_z \ (\mathrm{mm}^3 \ / \ \mathrm{msec}) \ \mathrm{x} \ k = f \ (\mathrm{Hz}),$$

wobei k eine Systemkonstante ist.

In einem hier ebenfalls nur schematisiert dargestellten Motorsteuergerät 3 wird die Taktfrequenz f verarbeitet und über die genannte Beziehung das spezifische Dosierpumpen-Fördervolumen $Q_z$ ermittelt. Zu diesem wird innerhalb des Motorsteuergerätes 3 ein auf geeignete Weise ermitteltes (siehe eingangs erwähnten Stand der Technik) spezifisches Treibstoff-Verbrauchsvolumen der Fahrzeug-Brennkraftmaschine addiert und so der Gesamtverbrauch (Gesamtvolumen $Q_G$) bestimmt und unter Berücksichtigung weiterer Parameter z. B. als Verbrauch in $\mathrm{l}/_{100km}$ oder ausschließlich in Litern an einem Anzeigeinstrument 5 im Blickfeld des Fahrzeugführers zur Anzeige gebracht. Denkbar wäre natürlich auch, die Einzelverbräuche von Fahrzeug-Brennkraftmaschine und Zuheizer separat anzuzeigen. Dies könnte gleichzeitig - oder auch nacheinander - nach Betätigen einer Auswahltaste erfolgen.

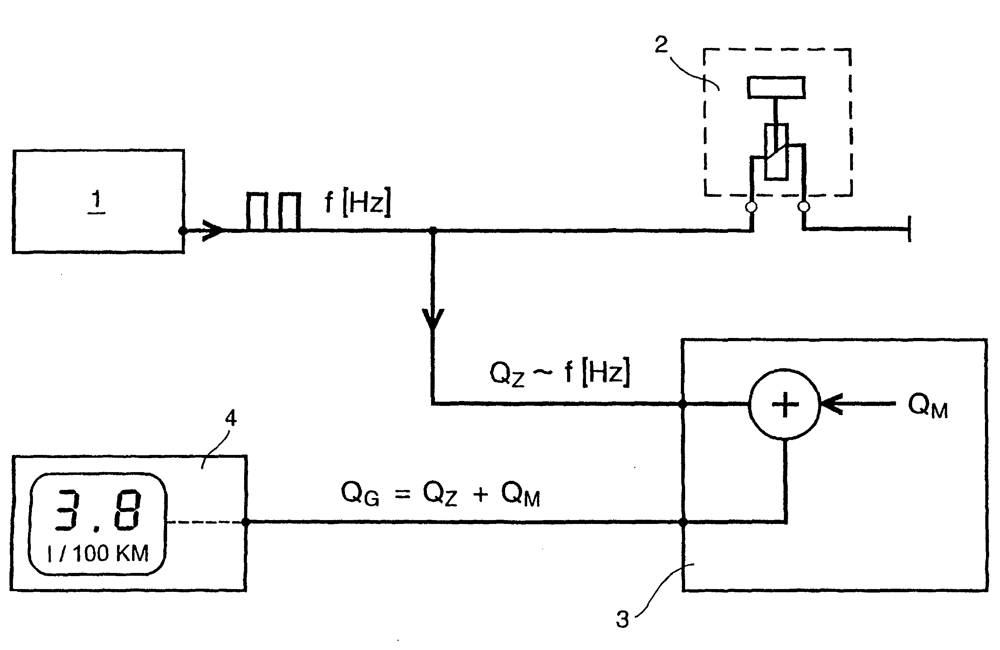

**Patentansprüche**

1.    Verfahren zur Bestimmung des Gesamt-Kraftstoffverbrauches bei einem brennkraftmaschinenbetriebenen Fahrzeug, wobei die der Brennkraftmaschine zufließende Kraftstoffmenge direkt ermittelt wird, **dadurch gekennzeichnet, daß** darüber hinaus auch der Verbrauch eines kraftstoffbetriebenen Zusatzaggregates (1), wie beispielsweise Standheizung oder Zuheizer, ermittelt wird und beide Einzelverbräuche addiert und als Gesamt-Kraftstoffverbrauch zur Anzeige gebracht werden, oder die Einzelkraftstoff-Verbräuche voneinander getrennt zur Anzeige gebracht werden, wobei Brennkraftmaschine und Zusatzaggregat (1) von einem gemeinsamen Treibstofftank gespeist werden.

**2.** Verfahren nach Anspruch 1, **dadurch gekennzeichnet, daß** der Kraftstoffverbrauch des Zusatzaggregates (1) über die Taktfrequenz f (Hz) einer das Zusatzaggregat (1) versorgenden Dosierpumpe (2) ermittelt wird.

**Claims**

**1.** Method for determining the overall fuel consumption of an internal combustion engine operated vehicle, and the volume of fuel flowing to the combustion engine is determined directly, **characterised in that** in addition thereto the consumption of fuel operated supplementary unit (1), for example a fixed heater or a complementary heater, is determined and both individual consumptions are added and displayed as total fuel consumption, or the individual fuel consumptions are displayed separately, and the internal combustion engine and supplementary unit (1) are fed by a common fuel tank.

**2.** Method according to Claim 1, **characterised in that** the fuel consumption of the supplementary unit (1) is determined via the beat frequency f (Hz) of an apportioning pump (2) which feeds the supplementary units (1).

**Revendications**

**1.** Procédé pour la détermination de la consommation globale en carburant d'un véhicule propulsé par un moteur à combustion interne, la quantité de carburant arrivant au moteur à combustion interne étant déterminée directement, **caractérisé en ce que**, de plus, également la consommation d'un groupe additionnel (1) fonctionnant avec du carburant, tel que, par exemple, un chauffage auxiliaire ou un élément chauffant d'appoint, est déterminée, et les deux consommations individuelles sont additionnées et affichées à titre de consommation globale de carburant, ou bien les consommations individuelles en carburant sont affichées séparément l'une de l'autre, le moteur à combustion interne et le groupe additionnel (1) étant alimentés par un réservoir de carburant commun.

**2.** Procédé selon la revendication 1, **caractérisé en ce que** la consommation en carburant du groupe additionnel (1) est déterminée par l'intermédiaire de la fréquence de cadencement f (Hz) d'une pompe de dosage (2) alimentant le groupe additionnel (1).

$Q_M$

$+$

$Q_Z \sim f\,[Hz]$

$Q_G = Q_Z + Q_M$

2

3

$f\,[Hz]$

1

4

3.8
l / 100 KM